# FASCICULE DE BREVET EUROPEEN

(11) **EP 0 841 216 B1**
(45) Date de publication et mention de la délivrance du brevet: **16.05.2001**
(21) Numéro de dépôt: 97402371.5
(22) Date de dépôt: 09.10.1997
(51) Int. Cl.: B60Q 3/06

(54) **Agencement pour l'éclairage d'un coffre de véhicule automobile**
Beleuchtung für einen Kofferraum eines Fahrzeuges
Lighting for vehicle luggage compartments

(30) Priorité: 11.10.1996 FR 9612394
(43) Date de publication de la demande: 13.05.1998
(73) Titulaire: AUTOMOBILES PEUGEOT, 75116 Paris (FR); AUTOMOBILES CITROEN, 92200 Neuilly-sur-Seine (FR)
(72) Inventeur: Coppi, Christophe, 25600 Vieux-Charmont (FR)
(74) Mandataire: Seytre, Françoise

(56) Documents cités:
- FR-A- 1 112 297
- US-A- 4 896 136
- PATENT ABSTRACTS OF JAPAN vol. 10, no. 92 (M-468) [2149] , 9 avril 1986 & JP 60 229837 A (NISSAN JIDOSHA KK), 15 novembre 1985,

## Description

L'invention concerne une installation d'éclairage d'un coffre de véhicule automobile.

Dans la plupart des véhicules automobiles actuels, il est prévu un dispositif d'éclairage du coffre le plus souvent constitué d'une lampe disposée dans l'espace interne dudit coffre et commandée par un commutateur actionné par l'ouverture du capot qui le ferme.

On constate également que les coffres arrière des véhicules sont, de plus en plus souvent, munis de compartiments internes fermés qui servent de rangement pour divers accessoires et, en particulier pour le chargeur de disques compacts de l'installation audiophonique du véhicule. Il est donc nécessaire de prévoir, en outre, un éclairage de ce compartiment.

L'invention a donc pour but de proposer un tel éclairage qui soit simple et bon marché.

A cet effet, l'invention a pour objet un agencement pour l'éclairage du coffre d'un véhicule automobile muni d'un compartiment de rangement, fermé par une porte, et d'un système d'éclairage comportant un boîtier contenant une source d'éclairage dans lequel le compartiment et le boîtier précités sont accolés par au moins une paroi latérale percée d'une ouverture apte à les faire communiquer optiquement. L'ouverture est, en outre, obturée, en position fermée de la porte du compartiment, par un volet solidaire de ladite porte.

Selon des variantes de réalisation :
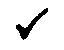 L'ouverture de communication est muni d'un panneau transparent.
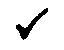 Le panneau transparent fermant l'ouverture de communication est pourvu d'une structure optique de diffusion du flux lumineux.

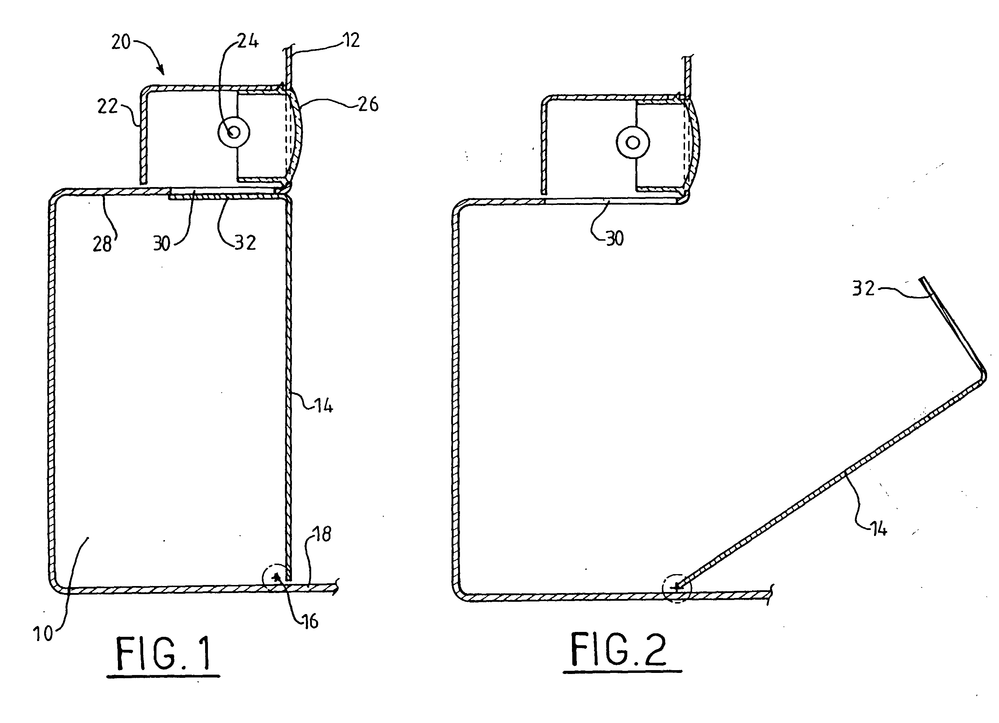

D'autres caractéristiques et avantages de l'invention apparaîtront à la lecture de la description détaillée qui va suivre, pour la compréhension de laquelle on se reportera aux dessins annexés, dans lesquels :
◆ La figure 1 est une vue en section verticale d'un compartiment interne de coffre de véhicule automobile muni d'un éclairage selon l'invention.
◆ La figure 2 est une vue analogue à celle de la figure 1 dans laquelle la porte du coffre est ouverte.

Comme cela est représenté sur les figures, un compartiment 10 est agencé dans la garniture intérieure du coffre arrière 12 d'un véhicule automobile. Il est disposé, par exemple, dans un espace existant entre ladite garniture et la tôle externe de la carrosserie, notamment au niveau du passage de roue.

Ce compartiment sert généralement à ranger divers accessoires : outillage, trousse de secours etc. Il peut être aussi occupé par un chargeur de disques compacts relié au système audiophonique du véhicule.

Le compartiment 10 est pourvu d'une porte 14 montée pivotante autour d'un axe 16 agencé à proximité du plancher 18 du coffre.

Le système d'éclairage du coffre 20 est disposé au-dessus du compartiment 10. Il est composé d'un boîtier 22 à l'intérieur duquel est placée une source lumineuse 24, par exemple une lampe tubulaire que l'on voit sur les figures en section radiale.

Le boîtier 22 est fermé, en direction de l'intérieur du coffre, par une paroi transparente 26, éventuellement munie d'une structure optique permettant de diffuser, d'une manière homogène à l'intérieur du coffre, le flux lumineux issu de la lampe 24.

Le compartiment 10 et le boîtier 22 sont accolés l'un à l'autre par l'une de leurs parois latérales. Dans l'exemple représenté, cette paroi latérale 28 est commune aux deux dispositifs.

La paroi 28 est percée d'une ouverture 30 qui fait donc communiquer l'intérieur du compartiment et celui du boîtier d'éclairage. Bien entendu, dans le cas où il y a deux parois contiguës, chacune de celles-ci sera percée d'une ouverture 30 en regard.

En position fermée de la porte 14 du compartiment 10, l'ouverture 30 est totalement masquée par un volet 32 solidaire de ladite porte. Ce volet peut venir de forme avec la porte 14 ou être articulé sur elle. Il doit présenter une élasticité suffisante pour, compte tenu de ses dimensions, permettre une ouverture et une fermeture facile de celle-ci.

Lorsque l'utilisateur ouvre le capot du coffre arrière, le commutateur de mise en service du système d'éclairage 20 est actionné. La porte 14 du compartiment 10 étant fermée, comme représenté sur la figure 1, l'ouverture 30 est obturée par le volet 32. En conséquence, tout le flux lumineux émis par la lampe 24 est dirigé vers l'intérieur du coffre.

Si l'utilisateur veut avoir accès au volume de rangement du compartiment 10, il ouvre sa porte 14 laquelle entraîne le volet 32 qui démasque l'ouverture 30, comme cela est représenté sur la figure 2. Une partie du flux lumineux du dispositif d'éclairage 20 est donc dirigé, à travers cette ouverture, vers l'intérieur du compartiment 10.

Pour assurer une meilleure diffusion du flux lumineux à l'intérieur du compartiment 10, l'ouverture 30 peut être munie d'un panneau transparent, éventuellement pourvu d'une structure optique.

Dans l'exemple que l'on vient de décrire, le système d'éclairage 20 est situé au-dessus du compartiment 10, cette disposition n'est évidemment pas limitative. En fait, le système d'éclairage 20 peut être contigu à n'importe laquelle des parois latérales du compartiment 10.

## Revendications

1. Agencement pour l'éclairage du coffre d'un véhicule automobile muni d'un compartiment de rangement (10), fermé par une porte (14), et d'un système d'éclairage (20) comportant un boîtier (22) contenant une source d'éclairage (24),
caractérisé en ce que le compartiment (10) et le boîtier (22) sont accolés par au moins une paroi latérale (28) percée d'une ouverture (30) apte faire communiquer optiquement ledit compartiment avec ledit boîtier et en ce que l'ouverture (30) est obturée, en position fermée de la porte (14), par un volet (32) solidaire de ladite porte.

2. Agencement selon la revendication 1,
caractérisé en ce que l'ouverture (30) est muni d'un panneau transparent.

3. Agencement selon la revendication 2,
caractérisé en ce que le panneau transparent fermant l'ouverture (30) est pourvu d'une structure optique de diffusion du flux lumineux.

## Claims

1. Arrangement for lighting the luggage compartment of a motor vehicle which is equipped with a storage compartment (10) closed by a door (14) and with a lighting system (20) comprising a casing (22) containing a source of illumination (24),
characterized in that the compartment (10) and the casing (22) are adjoining via at least one side wall (28) pierced with an opening (30) capable of allowing said compartment to communicate optically with said casing and in that the opening (30) is closed off when the door (14) is in the closed position, by a flap (32) which forms an integral part of the said door.

2. Arrangement according to Claim 1,
characterized in that the opening (30) is equipped with a transparent panel.

3. Arrangement according to Claim 2,
characterized in that the transparent panel that closes the opening (30) has an optical structure for diffusing the light.

## Patentansprüche

1. Anordnung zur Beleuchtung eines Kraftfahrzeugkofferraums, der mit einem durch eine Tür (14) geschlossenen Lagerungsfach (10) und einem Beleuchtungssystem (20) versehen ist, das ein Gehäuse (22) enthält, in dem einen Lichtquelle (24) angeordnet ist, dadurch gekennzeichnet, daß das Fach (10) und das Gehäuse (22) durch mindestens eine Seitenwand (28) aneinandergefügt sind, die mit einer Öffnung (30) versehen ist, welche eine optische Verbindung zwischen dem Fach und dem Gehäuse herstellen kann, und daß die Öffnung (30) bei geschlossener Stellung der Tür (14) durch eine fest mit der Tür verbundene Klappe (32) verschlossen ist.

2. Anordnung nach Anspruch 1, dadurch gekennzeichnet, daß die Öffnung (30) mit einer durchsichtigen Platte versehen ist.

3. Anordnung nach Anspruch 2, dadurch gekennzeichnet, daß die die Öffnung (30) schließende durchsichtige Platte mit einer optischen Konstruktion zur Streuung des Lichtstroms versehen ist.
